# EUROPEAN PATENT APPLICATION

(11) **EP 4 800 918 A1**
(43) Date of publication of application: **02.09.2026**
(21) Application number: 23956581.5
(22) Date of filing: 10.11.2023
(51) Int. Cl.: H02P 29/20

(54) **SPEED ADJUSTMENT METHOD, SELF-MOVING DEVICE AND COMPUTER READABLE STORAGE MEDIUM**

(30) Priority: 24.10.2023 CN 202311389330; 07.11.2023 CN 202311477083
(71) Applicant: Shenzhen Hanyang Technology Co., Ltd., Shenzhen, Guangdong 518000 (CN)
(72) Inventor: HUANG, Yang, Shenzhen, Guangdong 518000 (CN); ZHENG, Chuwei, Shenzhen, Guangdong 518000 (CN)
(74) Representative: Abel & Imray LLP
(86) International application number: PCT/CN2023/130927
(87) International publication number: WO 2025/086344

(57) **Abstract**

Disclosed are a method for adjusting a speed, an autonomous mobile apparatus, and a computer-readable storage medium. The method is applied to the autonomous mobile apparatus, where the autonomous mobile apparatus includes a travelling motor and a working motor, and the method includes: acquiring a present current of the working motor; determining a first speed value according to the present current of the working motor through a preset speed adjustment algorithm; and adjusting a working current of the travelling motor, and causing a travelling speed value of the autonomous mobile apparatus to reach the first speed value.

## Description

The present disclosure claims the priority to Chinese Patent Application No. 202311389330.X, filed with the CNIPA on October 24, 2023, and entitled "METHOD AND DEVICE FOR ADJUSTING SPEED, AUTONOMOUS MOBILE APPARATUS, AND COMPUTER-READABLE STORAGE MEDIUM", which is incorporated herein by reference in its entirety.

The present disclosure claims the priority to Chinese Patent Application No. 202311477083.9, filed with the CNIPA on November 7, 2023, and entitled "METHOD AND DEVICE FOR ADJUSTING SPEED, AUTONOMOUS MOBILE APPARATUS, AND COMPUTER-READABLE STORAGE MEDIUM", which is incorporated herein by reference in its entirety.

### TECHNICAL FIELD

The present disclosure relates to the technical field of autonomous mobile apparatuses, and in particular to a method for adjusting a speed, an autonomous mobile apparatus, and a computer-readable storage medium.

### BACKGROUND

With the development of science and technology, autonomous mobile apparatuses are gradually known to people, and an increasing number of autonomous mobile apparatuses such as snow blowers are applied to people's daily work and lives. At present, the inventor has realized that parameters of a snow rolling motor and a travelling motor of the snow blower are not dynamically adjusted, and the snow blower travels at a uniform speed. In consequence, frequent overcurrent of the snow rolling motor/travelling motor caused by excessive load is probably caused. To be specific, snow removal efficiency and machine running stability are affected. It can be seen that the autonomous mobile apparatus can only work according to a speed set by a user, and cannot adjust a running speed according to a working condition, and thus flexibility of speed adjustment is reduced.

### SUMMARY

A method for adjusting a speed, an autonomous mobile apparatus, and a computer-readable storage medium are disclosed in embodiments of the present disclosure to improve flexibility of speed adjustment.

In a first aspect, a method for adjusting a speed is disclosed in the embodiments of the present disclosure. The method is applied to an autonomous mobile apparatus, where the autonomous mobile apparatus includes a travelling motor and a working motor, and the method includes:
acquiring a present current of the working motor;
determining a first speed value according to the present current through a preset speed adjustment algorithm; and
adjusting a working current of the travelling motor, and causing a travelling speed value of the autonomous mobile apparatus to reach the first speed value.

In a second aspect, an autonomous mobile apparatus is disclosed in the embodiments of the present disclosure. The autonomous mobile apparatus includes a travelling motor, a working motor, and a processor, where the processor controls the travelling motor to implement the method disclosed in the first aspect according to the working motor.

In a third aspect, a computer-readable storage medium is disclosed in the embodiments of the present disclosure. The computer-readable storage medium stores a computer program or computer instructions, where the computer program or the computer instructions, when run by a processor, implement the method disclosed in the first aspect.

In the embodiments of the present disclosure, the autonomous mobile apparatus including the travelling motor and the working motor acquires the present current of the working motor, determines the first speed value according to the present current of the working motor through the preset speed adjustment algorithm, adjusts the working current of the travelling motor, and causes the travelling speed value of the autonomous mobile apparatus to reach the first speed value. It can be seen that the travelling speed of the autonomous mobile apparatus may be adjusted according to the current of the working motor of the autonomous mobile apparatus. Thus, the flexibility of speed adjustment can be improved. In addition, the travelling speed of the autonomous mobile apparatus may be adjusted according to the current of the working motor of the autonomous mobile apparatus. Thus, overload of the autonomous mobile apparatus can be avoided, working efficiency, balance, and stability of the autonomous mobile apparatus can be improved, and power consumption of the autonomous mobile apparatus can be reduced.

The details in one or more embodiments of the present disclosure are set forth in the following accompanying drawings and descriptions, and other features and advantages of the present disclosure will become apparent from the description, accompanying drawings, and claims.

### BRIEF DESCRIPTION OF THE DRAWINGS

To describe the technical solutions in embodiments of the present disclosure more clearly, the accompanying drawings required for describing the embodiments are briefly introduced below. Apparently, the accompanying drawings in the following descriptions show merely some embodiments of the present disclosure, and those skilled in the art can also derive other accompanying drawings from these accompanying drawings without creative efforts.
FIG. 1 is a schematic flowchart of a method for adjusting a speed disclosed in the embodiments of the present disclosure;
FIG. 2 is a schematic flowchart of triggering acquisition of a present current of a working motor disclosed in the embodiments of the present disclosure;
FIG. 3 is a schematic diagram of a principle of a proportional integral derivative (PID) algorithm disclosed in the embodiments of the present disclosure;
FIG. 4 is a schematic flowchart of determining a first speed value through the PID algorithm disclosed in the embodiments of the present disclosure;
FIG. 5 is a schematic structural diagram of a device for adjusting a speed disclosed in the embodiments of the present disclosure; and
FIG. 6 is a schematic structural diagram of an autonomous mobile apparatus disclosed in the embodiments of the present disclosure.

### DETAILED DESCRIPTION

To enable those skilled in the art to better understand the solutions of the present disclosure, the technical solutions in embodiments of the present disclosure will be clearly and comprehensively described below in conjunction with the accompanying drawings in the embodiments of the present disclosure.

A method for adjusting a speed, an autonomous mobile apparatus, and a computer-readable storage medium are disclosed in the embodiments of the present disclosure to improve flexibility of speed adjustment. The detailed descriptions are provided below separately.

To better understand the embodiments of the present disclosure, the related technologies of the present disclosure are first described below.

With the development of science and technology, autonomous mobile apparatuses are gradually known to people, and an increasing number of autonomous mobile apparatuses such as snow blowers are applied to people's daily work and lives. The snow blower is provided with a snow rolling shovel and a travelling device that correspond to a snow rolling motor and a travelling motor respectively. In a case of heavy snow, the snow rolling motor is stalled or fails to push snow, the snow blower skids, and thus the snow blower is overloaded. In consequence, efficiency of snow removal and balance are affected, running performance of the motors is damaged, and a waste of electric energy of a robot is also caused.

At present, parameters of the snow rolling motor and the travelling motor of the snow blower are not dynamically adjusted, and the snow blower travels at a uniform speed. In consequence, frequent overcurrent of the snow rolling motor/travelling motor caused by excessive load is probably caused. To be specific, efficiency of snow removal and stability of machine running are affected. It can be seen that the autonomous mobile apparatus can only work according to a speed set by a user, and cannot adjust a running speed according to a working condition, and thus flexibility of speed adjustment is reduced.

To solve the above problem, the autonomous mobile apparatus including the travelling motor and the working motor acquires a present current of a working motor, determines a first speed value according to the present current of the working motor through a preset speed adjustment algorithm, adjusts a working current of a travelling motor, and causes a travelling speed of the autonomous mobile apparatus to reach the first speed value. It can be seen that the travelling speed of the autonomous mobile apparatus can be adjusted according to the current of the working motor of the autonomous mobile apparatus, so that the flexibility of speed adjustment can be improved.

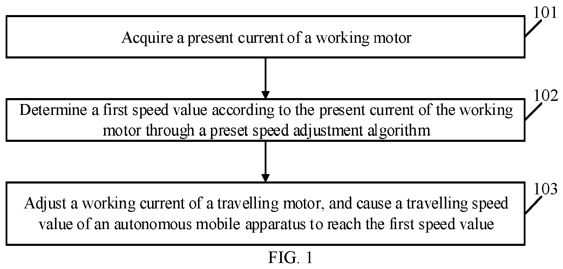

With reference to FIG. 1, a schematic flowchart of a method for adjusting a speed disclosed in the embodiments of the present disclosure is shown in FIG. 1. The method for adjusting a speed may be applied to an autonomous mobile apparatus, where the autonomous mobile apparatus includes a travelling motor and a working motor. As shown in FIG. 1, the method for adjusting a speed may include:
101, a present current of the working motor is acquired.

The autonomous mobile apparatus is provided with the travelling motor and the working motor. The travelling motor is a motor that controls travelling or motion of the autonomous mobile apparatus. The working motor is a motor that controls working of the autonomous mobile apparatus. It should be understood that working of the autonomous mobile apparatus herein does not include travelling or motion of the autonomous mobile apparatus, and indicates working other than travelling or motion. The functions of the working motor probably vary according to types of the autonomous mobile apparatuses. Illustratively, in a case where the autonomous mobile apparatus is the snow blower, the working motor is a snow rolling motor. In a case where the autonomous mobile apparatus is a lawn mower, the working motor is a mowing motor. In a case where the autonomous mobile apparatus is a leaf blowing robot, the working motor is an air blowing motor. One or more working motors of the autonomous mobile apparatus may be provided.

The autonomous mobile apparatus may acquire the present current of the working motor in real time, or may periodically acquire the present current of the working motor, or may acquire the present current of the working motor in a case of satisfying particular conditions. The present current of the working motor is a present working current of the working motor.

In some embodiments, the autonomous mobile apparatus may acquire the present current of the working motor in a case where a present travelling speed of the autonomous mobile apparatus is greater than or equal to a minimum travelling speed of the autonomous mobile apparatus. The minimum travelling speed of the autonomous mobile apparatus is a stored minimum travelling speed of the autonomous mobile apparatus. Illustratively, the minimum travelling speed of the autonomous mobile apparatus may be 0.01 m/s, etc.

In some embodiments, the autonomous mobile apparatus may first determine, in a case where the present travelling speed of the autonomous mobile apparatus is less than the minimum travelling speed of the autonomous mobile apparatus, a difference between an absolute value of the present travelling speed of the autonomous mobile apparatus and a second speed value; determine, in a case where the difference is less than a speed threshold, the second speed value as the first speed value; determine, in a case where the difference is not less than a speed threshold and the absolute value of the present travelling speed of the autonomous mobile apparatus is greater than the second speed value, a difference between the absolute value of the present travelling speed of the autonomous mobile apparatus and the speed threshold as the first speed value; and determine, in a case where the difference is not less than a speed threshold and the absolute value of the present travelling speed of the autonomous mobile apparatus is not greater than the second speed value, a sum of the absolute value of the present travelling speed of the autonomous mobile apparatus and the speed threshold as the first speed value. The second speed value is a preset travelling speed value of the autonomous mobile apparatus.

The present travelling speed of the autonomous mobile apparatus may include a present travelling direction of the autonomous mobile apparatus and a present travelling speed value of the autonomous mobile apparatus. The present travelling direction of the autonomous mobile apparatus may be forward or backward. The present travelling direction of the autonomous mobile apparatus may be indicated by a positive sign or a negative sign. The positive sign is indicated in a case where the present travelling direction of the autonomous mobile apparatus is forward, and the negative sign is indicated in a case where the present travelling direction of the autonomous mobile apparatus is backward. Illustratively, assuming that the present travelling speed of the autonomous mobile apparatus is -0.3 m/s, - indicates that the present travelling direction is backward, 0.3 m/s indicates the present travelling speed value of the autonomous mobile apparatus, and -0.3 m/s indicates that the autonomous mobile apparatus moves backwards at a speed of 0.3 m/s. The present travelling speed value of the autonomous mobile apparatus may be the absolute value of the present travelling speed of the autonomous mobile apparatus.

A travelling direction of the minimum travelling speed of the autonomous mobile apparatus is forward.

The autonomous mobile apparatus may first acquire the present travelling speed of the autonomous mobile apparatus, and then determine whether the present travelling speed of the autonomous mobile apparatus is less than the minimum travelling speed of the autonomous mobile apparatus. In a case of determining that the present travelling speed of the autonomous mobile apparatus is greater than or equal to the minimum travelling speed of the autonomous mobile apparatus, it indicates that the autonomous mobile apparatus travels forwards, and the present current of the working motor may be acquired. In a case of determining that the present travelling speed of the autonomous mobile apparatus is less than the minimum travelling speed of the autonomous mobile apparatus, the difference between the absolute value of the present travelling speed of the autonomous mobile apparatus and the second speed value may be determined. Then, whether the difference is less than the speed threshold may be determined. In a case of determining that the difference is less than the speed threshold, it indicates that the difference between the present travelling speed value of the autonomous mobile apparatus and the second speed is small, and the second speed value may be directly determined as the first speed value. In a case of determining that the difference is not less than (i.e. greater than or equal to) the speed threshold, it indicates that the difference between the present travelling speed value of the autonomous mobile apparatus and the second speed value is big, and whether the absolute value of the present travelling speed of the autonomous mobile apparatus is greater than the second speed value may be determined. In a case of determining that the absolute value of the present travelling speed of the autonomous mobile apparatus is greater than the second speed value, it indicates that the present travelling speed value of the autonomous mobile apparatus is greater than the second speed value. The difference between the absolute value of the present travelling speed of the autonomous mobile apparatus and the speed threshold may be determined as the first speed value. To be specific, the travelling speed value of the autonomous mobile apparatus is decreased to cause the travelling speed value of the autonomous mobile apparatus to approach the second speed value. In a case of determining that the absolute value of the present travelling speed of the autonomous mobile apparatus is not greater than (i.e. less than or equal to) the second speed value, it indicates that the present travelling speed value of the autonomous mobile apparatus is less than the second speed value. The sum of the absolute value of the present travelling speed of the autonomous mobile apparatus and the speed threshold may be determined as the first speed value. To be specific, the travelling speed value of the autonomous mobile apparatus is increased to cause the travelling speed value of the autonomous mobile apparatus to approach the second speed value.

In some embodiments, in a case of determining that the present travelling speed of the autonomous mobile apparatus is less than the minimum travelling speed of the autonomous mobile apparatus, whether the present travelling speed of the autonomous mobile apparatus is less than a maximum negative travelling speed of the autonomous mobile apparatus may continue to be determined. In a case of determining that the present travelling speed of the autonomous mobile apparatus is less than the maximum negative travelling speed of the autonomous mobile apparatus, it indicates that the present travelling speed value is greater than the stored maximum backward travelling speed value. The present travelling speed of the autonomous mobile apparatus may be set as the maximum negative travelling speed of the autonomous mobile apparatus to update the stored maximum negative travelling speed. The maximum negative travelling speed of the autonomous mobile apparatus is the maximum autonomous mobile apparatus backward travelling speed stored in the autonomous mobile apparatus. It can be seen that the maximum negative travelling speed of the autonomous mobile apparatus is not fixed. Illustratively, the maximum negative travelling speed of the autonomous mobile apparatus may be -0.3 m/s, -0.4 m/s, etc.

In a case of determining that the present travelling speed of the autonomous mobile apparatus is not less than (i.e. greater than or equal to) the maximum negative travelling speed of the autonomous mobile apparatus, or only after the present travelling speed of the autonomous mobile apparatus is set as the maximum negative travelling speed of the autonomous mobile apparatus, the difference between the absolute value of the present travelling speed of the autonomous mobile apparatus and the second speed value may be determined.

In some embodiments, in a case where the present travelling speed of the autonomous mobile apparatus is greater than or equal to the minimum travelling speed of the autonomous mobile apparatus, a time difference may be determined according to current time and a previous time stamp.

In a case where the present travelling speed of the autonomous mobile apparatus is greater than or equal to the minimum travelling speed of the autonomous mobile apparatus, the time difference may be determined directly according to the current time and the previous time stamp, or whether the second speed value is greater than the maximum travelling speed of the autonomous mobile apparatus may be determined first. In a case of determining that the second speed value is greater than the maximum travelling speed of the autonomous mobile apparatus, the travelling speed of the autonomous mobile apparatus cannot reach the second speed value due to the limitation of the maximum travelling speed of the autonomous mobile apparatus. Thus, the second speed value may be determined as the maximum travelling speed of the autonomous mobile apparatus. In a case of determining that the second speed value is not greater than (i.e. less than or equal to) the maximum travelling speed of the autonomous mobile apparatus, it indicates that the travelling speed of the autonomous mobile apparatus may reach the second speed value, and the time difference may be determined according to the current time and the previous time stamp.

After determining the time difference according to the current time and the previous time stamp, the autonomous mobile apparatus may acquire the present current of the working motor.

In some embodiments, whether an obstacle exists may be determined. In a case of determining that the obstacle exists, the working current of the travelling motor may be adjusted, and the travelling speed of the autonomous mobile apparatus is caused to reach 0. In a case of determining that no obstacle exists, the present current of the working motor may be acquired.

Before the speed is adjusted, the autonomous mobile apparatus may determine whether the obstacle exists. In a case of determining that the obstacle exists, it indicates that the autonomous mobile apparatus probably collides with the obstacle if the autonomous mobile apparatus continues travelling in the original direction. To avoid a collision between the autonomous mobile apparatus and the obstacle, in one case, the autonomous mobile apparatus may adjust the working current of the travelling motor, and cause the travelling speed of the autonomous mobile apparatus to reach 0, even if the autonomous mobile apparatus stops travelling; and in another case, the autonomous mobile apparatus may bypass the obstacle. In this way, the collision between the autonomous mobile apparatus and the obstacle can be avoided without affecting working of the autonomous mobile apparatus. In a case of determining that no obstacle exists, the present current of the working motor may be directly acquired, or the present travelling speed of the autonomous mobile apparatus may be acquired. Thus, whether the present travelling speed of the autonomous mobile apparatus is less than the minimum travelling speed of the autonomous mobile apparatus may be further determined.

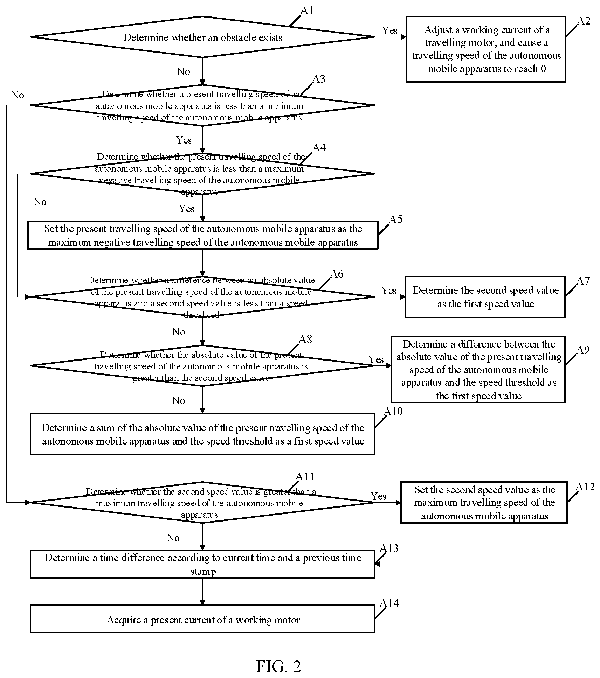

It should be understood that different embodiments described above may be combined freely. Illustratively, with reference to FIG. 2, a schematic flowchart of triggering acquisition of a present current of a working motor disclosed in the embodiments of the present disclosure is shown in FIG. 2. FIG. 2 shows a case where different embodiments described above are combined. As shown in FIG. 2, the flow may include:
A1, whether the obstacle exists is determined, step A2 is executed in a case where the obstacle exists, and step A3 is executed in a case where no obstacle exists.
A2, the working current of the travelling motor is adjusted, and the travelling speed of the autonomous mobile apparatus is caused to reach 0.
A3, whether the present travelling speed of the autonomous mobile apparatus is less than the minimum travelling speed of the autonomous mobile apparatus is determined, step A4 is executed in a case where the present travelling speed of the autonomous mobile apparatus is less than the minimum travelling speed of the autonomous mobile apparatus, and step A11 is executed in a case where the present travelling speed of the autonomous mobile apparatus is not less than (i.e. greater than or equal to) the minimum travelling speed of the autonomous mobile apparatus.
A4, whether the present travelling speed of the autonomous mobile apparatus is less than the maximum negative travelling speed of the autonomous mobile apparatus is determined, step A5 is executed in a case where the present travelling speed of the autonomous mobile apparatus is less than the maximum negative travelling speed of the autonomous mobile apparatus, and step A6 is executed in a case where the present travelling speed of the autonomous mobile apparatus is not less than the maximum negative travelling speed of the moving apparatus.
A5, the present travelling speed of the autonomous mobile apparatus is set as the maximum negative travelling speed of the autonomous mobile apparatus.
A6, whether the difference between the absolute value of the present travelling speed of the autonomous mobile apparatus and the second speed value is less than the speed threshold is determined, step A7 is executed in a case where the difference between the absolute value of the present travelling speed of the autonomous mobile apparatus and the second speed value is less than the speed threshold, and step A8 is executed in a case where the difference between the absolute value of the present travelling speed of the autonomous mobile apparatus and the second speed value is not less than the speed threshold.
A7, the second speed value is determined as the first speed value.
A8, whether the absolute value of the present travelling speed of the autonomous mobile apparatus is greater than the second speed value is determined, step A9 is executed in a case where the absolute value of the present travelling speed of the autonomous mobile apparatus is greater than the second speed value, and step A10 is executed in a case where the absolute value of the present travelling speed of the autonomous mobile apparatus is not greater than the second speed value.
A9, the difference between the absolute value of the present travelling speed of the autonomous mobile apparatus and the speed threshold is determined as the first speed value.
A10, the sum of the absolute value of the present travelling speed of the autonomous mobile apparatus and the speed threshold is determined as the first speed value.
A11, whether the second speed value is greater than the maximum travelling speed of the autonomous mobile apparatus is determined, step A12 is executed in a case where the second speed value is greater than the maximum travelling speed of the autonomous mobile apparatus, and step A13 is executed in a case where the second speed value is not greater than the maximum travelling speed of the autonomous mobile apparatus.
A12, the second speed value is set as the maximum travelling speed of the autonomous mobile apparatus.
A13, the time difference is determined according to the current time and the previous time stamp.
A14, the present current of the working motor is acquired.

The autonomous mobile apparatus may determine whether the obstacle exists in real time or periodically. In a case of determining that the obstacle exists, the autonomous mobile apparatus may adjust the working current of the travelling motor, and cause the travelling speed of the autonomous mobile apparatus to reach 0. To be specific, the travelling speed of the autonomous mobile apparatus is lowered to 0. The autonomous mobile apparatus may alternatively bypass the obstacle.

The autonomous mobile apparatus determines whether the obstacle exists, which can be understood that whether the obstacle exists in front of the autonomous mobile apparatus is determined. The autonomous mobile apparatus may inspect whether the obstacle exists in front of the autonomous mobile apparatus through a sensor mounted in front of the autonomous mobile apparatus. The sensor includes, but is not limited to, an image sensor, a laser sensor, a millimeter wave sensor, and an infrared sensor.

The obstacle may be an animate obstacle or an inanimate obstacle. In a case of determining that the animate obstacle exists, the working current of the travelling motor may be directly adjusted, the travelling speed of the autonomous mobile apparatus may be caused to reach 0, or the obstacle may be directly bypassed. In a case of determining that the inanimate obstacle exists, whether a linear travelling speed of the autonomous mobile apparatus is greater than 0 may continue to be determined. In a case of determining that the linear travelling speed of the autonomous mobile apparatus is greater than 0, the working current of the travelling motor may be adjusted, the travelling speed of the autonomous mobile apparatus may be caused to reach 0, or the obstacle may be bypassed.

In a case of determining that no obstacle exists, or after the obstacle is bypassed, or in a case of determining that the linear travelling speed of the autonomous mobile apparatus is equal to 0, the speed threshold may be acquired, and the present travelling speed of the autonomous mobile apparatus may be determined. The speed threshold is a preset value. Illustratively, the speed threshold may be 0.3 m/s, etc., which is not limited herein. The present travelling speed of the autonomous mobile apparatus is a speed at which the autonomous mobile apparatus currently travels.

Illustratively, in a case where the autonomous mobile apparatus travels according to wheel rolling, if the autonomous mobile apparatus includes a left wheel and a right wheel, the present travelling speed of the autonomous mobile apparatus may be an average value of linear speeds of the two wheels. It should be understood that the example is to illustratively describe determination of the present travelling speed of the autonomous mobile apparatus, which is not limitative.

Then, whether the present travelling speed of the autonomous mobile apparatus is less than the minimum travelling speed of the autonomous mobile apparatus may continue to be determined. In a case of determining that the present travelling speed of the autonomous mobile apparatus is less than the minimum travelling speed of the autonomous mobile apparatus, whether the present travelling speed of the autonomous mobile apparatus is less than the maximum negative travelling speed of the autonomous mobile apparatus may continue to be determined. In a case of determining that the present travelling speed of the autonomous mobile apparatus is less than the maximum travelling speed of the autonomous mobile apparatus, it indicates that the present travelling speed value is greater than the stored maximum backward travelling speed value. The present travelling speed of the autonomous mobile apparatus may be set as the maximum negative travelling speed of the autonomous mobile apparatus to update the stored maximum negative travelling speed. The maximum negative travelling speed of the autonomous mobile apparatus is the maximum autonomous mobile apparatus backward travelling speed stored in the autonomous mobile apparatus. It can be seen that the maximum negative travelling speed of the autonomous mobile apparatus is not fixed. Illustratively, the maximum negative travelling speed of the autonomous mobile apparatus may be -0.3 m/s, -0.4 m/s, etc.

In a case of determining that the present travelling speed of the autonomous mobile apparatus is not less than (i.e. greater than or equal to) the maximum negative travelling speed of the autonomous mobile apparatus, or after the present travelling speed of the autonomous mobile apparatus is set as the maximum negative travelling speed of the autonomous mobile apparatus, the difference between the absolute value of the present travelling speed of the autonomous mobile apparatus and the second speed value may be determined. Whether the difference between the absolute value of the present travelling speed of the autonomous mobile apparatus and the second speed value is less than the speed threshold may be determined. In a case of determining that the difference between the absolute value of the present travelling speed of the autonomous mobile apparatus and the second speed value is less than the speed threshold, it indicates that the difference between the present travelling speed value of the autonomous mobile apparatus and the second speed value is small, and the second speed value may be directly determined as the first speed value. Then step 103 may be executed. The second speed value is the preset travelling speed value of the autonomous mobile apparatus.

In a case of determining that the difference between the absolute value of the present travelling speed of the autonomous mobile apparatus and the second speed value is not less than (i.e. greater than or equal to) the speed threshold, it indicates that the difference between the present travelling speed value of the autonomous mobile apparatus and the second speed value is big. Whether the absolute value of the present travelling speed of the autonomous mobile apparatus is greater than the second speed value may be determined. In a case of determining that the absolute value of the present travelling speed of the autonomous mobile apparatus is greater than the second speed value, the difference between the absolute value of the present travelling speed of the autonomous mobile apparatus and the speed threshold may be determined as the first speed value. To be specific, the difference between the present travelling speed value of the autonomous mobile apparatus and the speed threshold is big. In a case where the present travelling speed value of the autonomous mobile apparatus is greater than the second speed value, the travelling speed value of the autonomous mobile apparatus may be lowered to approach the second speed value. In a case of determining that the absolute value of the present travelling speed of the autonomous mobile apparatus is less than the second speed value, the sum of the absolute value of the present travelling speed of the autonomous mobile apparatus and the speed threshold may be determined as the first speed value. To be specific, the difference between the present travelling speed value of the autonomous mobile apparatus and the second speed value is big. In a case where the present travelling speed value of the autonomous mobile apparatus is less than the second speed value, the travelling speed value of the autonomous mobile apparatus may be increased to approach the second speed value. It can be seen that in a case where the difference between the present travelling speed value of the autonomous mobile apparatus and the second speed value is big, the travelling speed value of the autonomous mobile apparatus may be adjusted to approach the second speed value instead of adjusting to the second speed value at one time. Thus, the speed may be adjusted in stages. The travelling speed value may be interpreted as the travelling speed value.

In one case, the difference between the absolute value of the present travelling speed of the autonomous mobile apparatus and the second speed value may be directly compared with the speed threshold. In another case, an absolute value of the difference between the absolute value of the present travelling speed of the autonomous mobile apparatus and the second speed value may be determined first, and then the absolute value of the difference is compared with the speed threshold. In this case, step A6 may be replaced by the following step that whether the absolute value of the difference between the absolute value of the present travelling speed of the autonomous mobile apparatus and the second speed value is less than the speed threshold is determined. Step A7 is executed in a case where the absolute value of the difference between the absolute value of the present travelling speed of the autonomous mobile apparatus and the second speed value is less than the speed threshold. Step A8 is executed in a case where the difference between the absolute value of the present travelling speed of the autonomous mobile apparatus and the second speed value is not less than an absolute value of the speed threshold.

In a case of determining that the present travelling speed of the autonomous mobile apparatus is not less than (i.e. greater than or equal to) the minimum travelling speed of the autonomous mobile apparatus, whether the second speed value is greater than a maximum travelling speed of the autonomous mobile apparatus may continue to be determined. In a case of determining that the second speed value is greater than the maximum travelling speed of the autonomous mobile apparatus, the travelling speed of the autonomous mobile apparatus cannot reach the second speed value due to the limitation of the maximum travelling speed of the autonomous mobile apparatus. Thus, the second speed value may be set as the maximum travelling speed of the autonomous mobile apparatus. In a case of determining that the second speed value is not greater than (i.e. less than or equal to) the maximum travelling speed of the autonomous mobile apparatus, or after the second speed value is set as the maximum travelling speed of the autonomous mobile apparatus, it indicates that the travelling speed of the autonomous mobile apparatus may reach the second speed value. The time difference may be determined according to the current time and the previous time stamp, and the current time may be updated as the previous time stamp. Then the present current of the working motor may be acquired. The maximum travelling speed of the autonomous mobile apparatus is the maximum autonomous mobile apparatus forward travelling speed stored in the autonomous mobile apparatus. It can be seen that the maximum travelling speed of the autonomous mobile apparatus is not fixed. Illustratively, the maximum travelling speed of the autonomous mobile apparatus may be 0.3 m/s, 0.4 m/s, etc.

It should be understood that the flow shown in FIG. 2 is to illustratively describe a trigger condition for acquiring the present current of the working motor, and is not intended to limit the specific trigger condition. Illustratively, steps A1 and A2 may not be executed. Illustratively, steps A3-A10 may not be executed. In this case, if a determination result in step A1 is NO, step A11 may be directly executed. Illustratively, steps A4 and A5 may not be executed. In this case, if a determination result in step A3 is yes, step A6 may be directly executed. Illustratively, steps A11 and A12 may not be executed. In this case, if a determination result in step A3 is NO, step A13 may be directly executed. Illustratively, step A13 may not be performed. Illustratively, steps A3-A13 may not be executed. In this case, if a determination result in step A1 is NO, step A14 may be directly executed. Illustratively, steps A1-A13 may not be performed.

As shown in FIG. 2, in a case where the present travelling speed of the autonomous mobile apparatus is less than the minimum travelling speed of the autonomous mobile apparatus, the difference between the absolute value of the present travelling speed of the autonomous mobile apparatus and the second speed value may be determined. In a case where the difference is less than the speed threshold, the second speed value may be determined as the first speed value. In a case where the difference is not less than the speed threshold and the absolute value of the present travelling speed of the autonomous mobile apparatus is greater than the second speed value, the difference between the absolute value of the present travelling speed of the autonomous mobile apparatus and the speed threshold may be determined as the first speed value. In a case where the difference is not less than the speed threshold and the absolute value of the present travelling speed of the autonomous mobile apparatus is not greater than the second speed value, the sum of the absolute value of the present travelling speed of the autonomous mobile apparatus and the speed threshold is determined as the first speed value. After the first speed value is determined, step 103 may be executed.

It can be seen that the first speed value may be determined through step 102 or may be determined in the above manner. The methods to determine the first speed value are different in different cases. In a case where use of the preset speed adjustment algorithm is satisfied, the first speed value may be determined through the preset speed adjustment algorithm. In a case where use of the preset speed adjustment algorithm is not satisfied, the first speed value may be determined through other methods. Thus, the speed can be adjusted in different cases, and the flexibility of speed adjustment can be improved. In addition, an application range of the speed adjustment can also be expanded, and the condition that the speed can only be adjusted in one case, and cannot be adjusted in other cases can be avoided.

In some embodiments, the speed value of the travelling motor may alternatively be adjusted according to environment information. To be specific, steps 101-103 are executed. In a case where the autonomous mobile apparatus is the snow blower, a thickness of snow may be determined, and then a travelling speed value of the snow blower may be adjusted according to the thickness of the snow. The thickness of the snow may be determined through a vision sensor, radar, etc. or may be determined through a load condition of the snow rolling shovel corresponding to the snow rolling motor. The thickness of the snow may be determined before or when snow is removed through the snow blower.

102, the first speed value is determined according to the present current of the working motor through the preset speed adjustment algorithm.

The first speed value may be determined according to the present current of the working current through the preset speed adjustment algorithm after the present current of the working motor is acquired. The preset speed adjustment algorithm may be a proportional integral derivative (PID) algorithm, etc.

In some embodiments, in a movement process of the autonomous mobile apparatus, whether the autonomous mobile apparatus needs to turn may be determined. In a case of determining that the autonomous mobile apparatus does not need to turn, step 102 is executed. In a case of determining that the autonomous mobile apparatus needs to turn, since a turning speed is low when the autonomous mobile apparatus turns in situ, no overcurrent of the working motor exists. To be specific, no parameter adjustment is required, and thus step 102 is not executed.

In some embodiments, the autonomous mobile apparatus may determine a speed adjustment proportion according to the present current of the working motor through the preset speed adjustment algorithm, and the first speed value may be determined according to the speed adjustment proportion and the present travelling speed of the autonomous mobile apparatus.

In some embodiments, in a case where the speed adjustment proportion is greater than or equal to 0, and the present current of the working motor is greater than an initial current of the working motor or the present travelling speed of the autonomous mobile apparatus is greater than an initial travelling speed of the autonomous mobile apparatus, the first speed value may be determined according to the speed adjustment proportion and the present travelling speed of the autonomous mobile apparatus.

In some embodiments, in a case where the speed adjustment proportion is less than 0, the first speed value may be determined according to the minimum travelling speed of the autonomous mobile apparatus. In a case where the speed adjustment proportion is greater than or equal to 0, the present current of the working motor is not greater than an initial current of the working motor, the present travelling speed of the autonomous mobile apparatus is not greater than an initial travelling speed of the autonomous mobile apparatus, and the present travelling speed of the autonomous mobile apparatus is less than an activation speed of the autonomous mobile apparatus, the second speed value may be determined as the first speed value. In a case where the speed adjustment proportion is greater than or equal to 0, the present current of the working motor is not greater than an initial current of the working motor, the present travelling speed of the autonomous mobile apparatus is not greater than an initial travelling speed of the autonomous mobile apparatus, and the present travelling speed of the autonomous mobile apparatus is not less than an activation speed of the autonomous mobile apparatus, the activation speed of the autonomous mobile apparatus may be determined as the first speed value.

The autonomous mobile apparatus may first determine the speed adjustment proportion according to the present current of the working motor through the preset speed adjustment algorithm. Then, the autonomous mobile apparatus may determine the first speed value directly according to the speed adjustment proportion and the present travelling speed of the autonomous mobile apparatus. Alternatively, whether the speed adjustment proportion is less than 0 may be first determined. In a case of determining that the speed adjustment proportion is greater than or equal to (i.e. not less than) 0, whether the present current of the working motor is greater than the initial current of the working motor, or whether the present travelling speed of the autonomous mobile apparatus is greater than the initial travelling speed of the autonomous mobile apparatus or a ratio of the initial travelling speed of the autonomous mobile apparatus to the speed adjustment proportion may be determined. In a case of determining that the present current of the working motor is greater than the initial current of the working motor or the present travelling speed of the autonomous mobile apparatus is greater than the initial travelling speed of the autonomous mobile apparatus or the ratio of the initial travelling speed of the autonomous mobile apparatus to the speed adjustment proportion, the first speed value may be determined according to the speed adjustment proportion and the present travelling speed of the autonomous mobile apparatus. In a case of determining that the speed adjustment proportion is less than 0, the autonomous mobile apparatus may determine the first speed value according to the minimum travelling speed of the autonomous mobile apparatus. In a case of determining that the present current of the working motor is not greater than (i.e. less than or equal to) the initial current of the working motor and the present travelling speed of the autonomous mobile apparatus is not greater than (i.e. less than or equal to) the initial travelling speed of the autonomous mobile apparatus or the ratio of the initial travelling speed of the autonomous mobile apparatus to the speed adjustment proportion, whether the present travelling speed of the autonomous mobile apparatus is less than the activation speed of the autonomous mobile apparatus may be determined. In a case of determining that the present travelling speed of the autonomous mobile apparatus is less than the activation speed of the autonomous mobile apparatus, the second speed value may be determined as the first speed value. In a case of determining that the present travelling speed of the autonomous mobile apparatus is not less than the activation speed of the autonomous mobile apparatus, the activation speed of the autonomous mobile apparatus may be determined as the first speed value.

In some embodiments, a third speed value may be determined according to the speed adjustment proportion and the present travelling speed of the autonomous mobile apparatus. In a case where the third speed value is less than or equal to the second speed value and greater than or equal to the minimum travelling speed of the autonomous mobile apparatus, the third speed value may be determined as the first speed value. In a case where the third speed value is greater than the second speed value, the second speed value may be determined as the first speed value. In a case where the third speed value is less than the minimum travelling speed of the autonomous mobile apparatus, the first speed value may be determined according to the minimum travelling speed of the autonomous mobile apparatus.

The autonomous mobile apparatus may first determine the third speed value according to the speed adjustment proportion and the present travelling speed of the autonomous mobile apparatus. Then, the autonomous mobile apparatus may directly determine the third speed value as the first speed value, or may first determine whether the third speed value is greater than the second speed value. In a case where the third speed value is less than or equal to (i.e. not greater than) the second speed value, whether the third speed value is less than the minimum travelling speed of the autonomous mobile apparatus may continue to be determined. In a case of determining that the third speed value is greater than or equal to the minimum travelling speed of the autonomous mobile apparatus, the third speed value may be determined as the first speed value. In a case of determining that the third speed value is greater than the second speed value, the second speed value may be determined as the first speed value. In a case where the third speed value is less than the minimum travelling speed of the autonomous mobile apparatus, the first speed value may be determined according to the minimum travelling speed of the autonomous mobile apparatus.

In some embodiments, in a case where the time difference is greater than 0 and less than or equal to 1, the first speed value may be determined according to the present current of the working motor through the preset speed adjustment algorithm. In a case where the time difference is equal to 0, the second speed value may be determined as the first speed value.

After the present current of the working motor is acquired, the first speed value may be directly determined according to the present current of the working motor through the preset speed adjustment algorithm. Alternatively, whether the present current of the working motor is equal to 0 may be first determined. In a case of determining that the present current of the working motor is not equal to 0, whether the time difference is greater than 1 may be determined. In a case of determining that the time difference is less than or equal to (i.e. not greater than) 1, the first speed value may be determined according to the present current of the working motor through the preset speed adjustment algorithm. In a case of determining that the time difference is equal to 0, the second speed value may be determined as the first speed value.

It should be understood that different embodiments described above may be combined freely, and the specific combination method is not limited.

The description is provided below with the preset speed adjustment algorithm as the PID algorithm as an example.

In a case where the preset speed adjustment algorithm is the PID algorithm, the first speed value may be determined according to the present current of the working motor, a steady-state current of the working motor, and a current control range of the working motor through the PID algorithm.

The steady-state current of the working motor is a value required to steady the current of the working motor. PID control is to steady the current of the working motor to a steady value, i.e. the steady-state current of the working motor.

The current control range of the working motor is a current range that requires the current of the working motor to be steady. Illustratively, in a case where the autonomous mobile apparatus works, the current of the working motor may be steadied within a range of (0, 30 A], and the current control range of the working motor is 30 A. Illustratively, in a case where the autonomous mobile apparatus works, the current of the working motor may be steadied within a range of (10, 30A], and the current control range of the working motor is 20 A.

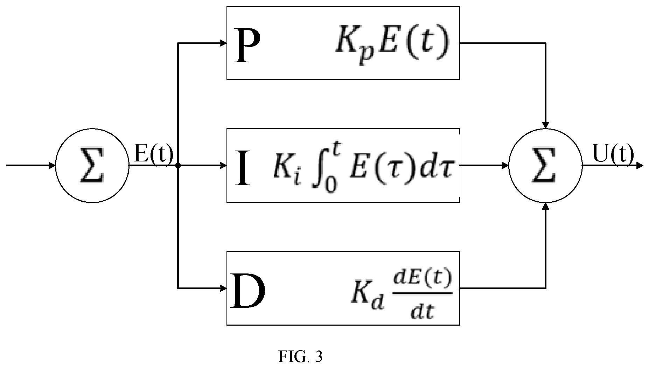

With reference to FIG. 3, a schematic diagram of a principle of a PID algorithm disclosed in the embodiments of the present disclosure is shown in FIG. 3. As shown in FIG. 3, output U(t) of the PID algorithm may be expressed as follows: $U \left(t\right) = {K}_{p} E \left(t\right) + {K}_{i} {\int }_{0}^{t} E \left(τ\right) dτ + {K}_{d} \frac{dE \left(t\right)}{dt}$

In the formula, *E*(*t*) denotes a proportion, ${\int }_{0}^{t} E \left(τ\right) dτ$ denotes an integral of the proportion, $\frac{dE \left(t\right)}{dt}$ denotes a derivative of the proportion, *Kₚ* denotes a proportional coefficient, *Kᵢ* denotes an integral coefficient, *K_{d}* denotes a derivative coefficient, and dt denotes a time difference.

It can be seen that the output of the PID algorithm is a weighted sum of the proportion, the integral, and the derivative.

The speed adjustment proportion may be first determined according to the present current of the working motor through the PID algorithm. Then, the first speed value may be determined according to the speed adjustment proportion and the present travelling speed of the autonomous mobile apparatus.

In a case of determining the speed adjustment proportion, a proportional result of the PID algorithm may be first determined according to the present current of the working motor. Then, a derivative result of the PID algorithm may be determined according to the proportional result of the PID algorithm. An integral result of the PID algorithm may be determined according to the proportional result of the PID algorithm, and the speed adjustment proportion may be further determined according to the proportional result, derivative result, and integral result of the PID algorithm. The proportional result of the PID algorithm is *E*(*t*)described above, the integral result of the PID algorithm is ${\int }_{0}^{t} E \left(τ\right) dτ$ described above, and the derivative result of the PID algorithm is $\frac{dE \left(t\right)}{dt}$ described above.

Illustratively, the proportional result *E*(*t*) of the PID algorithm may be expressed as follows: $E \left(t\right) = {\left(\frac{A - B}{C}\right)}^{D}$

In the formula, A denotes the present current of the working motor, B denotes the steady-state current of the working motor, C denotes the current control range of the working motor, and D denotes a power constant, which is a given value.

It should be understood that the above formula is to illustratively describe determination of the proportional result of the PID algorithm according to the present current of the working motor, the steady-state current of the working motor, and the current control range of the working motor, which is not limitative. For example, the proportional result of the PID algorithm may be determined according to the present current of the working motor, the steady-state current of the working motor, and the current control range of the working motor through various transformed formulas of the above formula.

In one case, the speed adjustment proportion may be U(t). In another case, the speed adjustment proportion may be 1-U(t). The speed adjustment proportion may be greater than 0, less than 0, or equal to 0.

The first speed value may be a product of the speed adjustment proportion and the absolute value of the present travelling speed of the autonomous mobile apparatus, or a ratio of the absolute value of the present travelling speed of the autonomous mobile apparatus to the speed adjustment proportion, or another value determined according to the speed adjustment proportion and the absolute value of the present travelling speed of the autonomous mobile apparatus.

In some embodiments, after the present current of the working motor is acquired, whether the present current of the working motor is within a threshold range may be first determined. In a case of determining that the present current of the working motor is within the threshold range, the first speed value may be determined according to the present current of the working motor through the PID algorithm. In a case of determining that the present current of the working motor is out of the threshold range, no processing may be performed, or the current of the travelling motor may be adjusted to lower the travelling speed of the autonomous mobile apparatus to 0.

Illustratively, assuming that the autonomous mobile apparatus is the snow blower, the current generated in a case where the snow rolling motor is unloaded is 10 A, and the current generated in a case of overcurrent of the snow rolling motor is 60 A, it is expected that the current may be steadied within the range of 30 A. Within a range where the current of the snow rolling motor is 30 A or lower, in a case where the travelling speed of a smart motor does not reach the second speed value, the travelling speed value of the autonomous mobile apparatus may be increased. The smaller the current is, the more rapid the acceleration is. In a case where the current of the snow rolling motor is within a range of 30 A-50 A, the travelling speed value of the autonomous mobile apparatus may be lowered by controlling the current of the working motor. Thus, the current of the snow rolling motor may be steadied at 30 A, and the greater the current is, the higher the acceleration of deceleration is. In a case where the current of the snow rolling motor exceeds 50 A, the travelling speed value of the autonomous mobile apparatus may be lowered to 0 to avoid overcurrent of the snow rolling motor. After the travelling speed value of the snow blower is lowered, less snow is rolled in per unit time, and less snow is to be thrown out by the snow rolling motor, so that the load of the snow rolling motor can be reduced. In this case, the steady-state current of the working motor is 30 A, the current control range of the working motor is 30 A, and the threshold range is (0, 50].

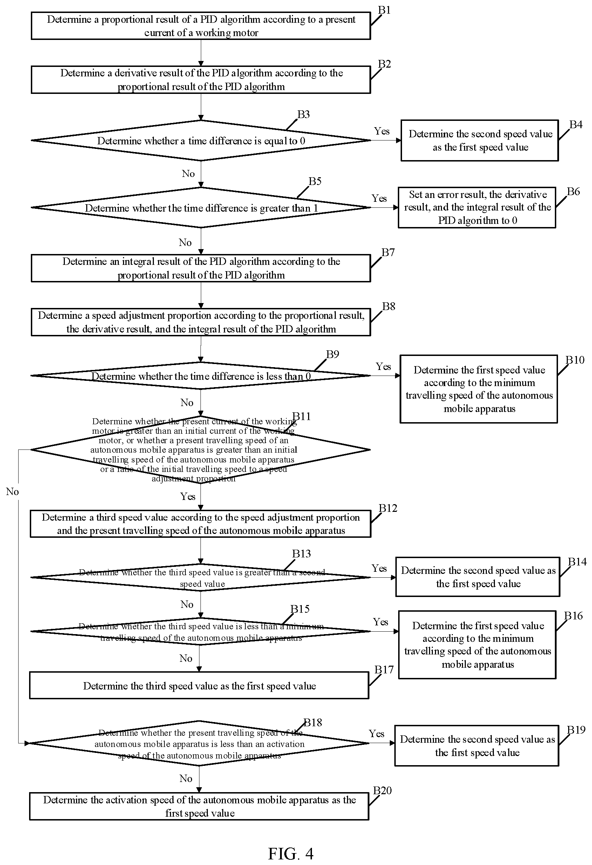

Illustratively, with reference to FIG. 4, a schematic flowchart of determining a first speed value through the PID algorithm disclosed in the embodiments of the present disclosure is shown in FIG. 4. As shown in FIG. 4, the flow may include:
B1, the proportional result of the PID algorithm is determined according to the present current of the working motor.
B2, the derivative result of the PID algorithm is determined according to the proportional result of the PID algorithm.
B3, whether the time difference is equal to 0 is determined, step B4 is executed in a case where the time difference is equal to 0, and step B5 is executed in a case where the time difference is greater than 0.
B4, the second speed value is determined as the first speed value.
B5, whether the time difference is greater than 1 is determined, step B6 is executed in a case where the time difference is greater than 1, and step B7 is executed in a case where the time difference is less than or equal to 1.
B6, an error result, the derivative result, and the integral result of the PID algorithm are set to 0.
B7, the integral result of the PID algorithm is determined according to the proportional result of the PID algorithm.
B8, the speed adjustment proportion is determined according to the proportional result, the derivative result, and the integral result of the PID algorithm.
B9, whether the speed adjustment proportion is less than 0 is determined, step B10 is executed in a case where the speed adjustment proportion is less than 0, and step B11 is executed in a case where the speed adjustment proportion is greater than or equal to 0.
B10, the first speed value is determined according to the minimum travelling speed of the autonomous mobile apparatus.
B11, whether the present current of the working motor is greater than the initial current of the working motor, or whether the present travelling speed of the autonomous mobile apparatus is greater than the initial travelling speed of the autonomous mobile apparatus or the ratio of the initial travelling speed to the speed adjustment proportion is determined, step B12 is executed if yes, and step B18 is executed if no.
B12, the third speed value is determined according to the speed adjustment proportion and the present travelling speed of the autonomous mobile apparatus.
B13, whether the third speed value is greater than the second speed value is determined, step B14 is executed in a case where the third speed value is greater than the second speed value, and step B15 is executed in a case where the third speed value is less than or equal to the second speed value.
B14, the second speed value is determined as the first speed value.
B15, whether the third speed value is less than the minimum travelling speed of the autonomous mobile apparatus is determined, step B16 is executed in a case where the third speed value is less than the minimum travelling speed of the autonomous mobile apparatus, and step B17 is executed in a case where the third speed value is greater than or equal to the minimum travelling speed of the autonomous mobile apparatus.
B16, the first speed value is determined according to the minimum travelling speed of the autonomous mobile apparatus.
B17, the third speed value is determined as the first speed value.
B18, whether the present travelling speed of the autonomous mobile apparatus is less than the activation speed of the autonomous mobile apparatus is determined, step B19 is executed if yes, and step B20 is executed if no.
B19, the second speed value is determined as the first speed value.
B20, the activation speed of the autonomous mobile apparatus is determined as the first speed value.

After the present current of the working motor is acquired, the proportional result of the PID algorithm may be first determined according to the present current of the working motor, and the derivative result of the PID algorithm may be determined according to the proportional result of the PID algorithm. Then, whether the time difference is equal to 0 may be determined. In a case of determining that the time difference is equal to 0, it indicates that the current time is identical to the previous time stamp, and the second speed value may be directly determined as the first speed value. In a case of determining that the time difference is greater than 0, whether the time difference is greater than 1 may continue to be determined. In a case of determining that the time difference is greater than 1, it indicates that a time interval between the current time and the previous time stamp is large, and the previous time stamp has a reference value. The error result, the derivative result, and the integral result of the PID algorithm may be directly set to 0. In a case of determining that the time difference is less than or equal to 1, the integral result of the PID algorithm may be determined according to the proportional result of the PID algorithm. After the integral result of the PID algorithm is determined, whether an absolute value of the integral result of the PID algorithm is greater than an integral upper limit may be first determined. In a case of determining that the absolute value of the integral result of the PID algorithm is greater than the integral upper limit, the integral upper limit may be determined as a final integral result of the PID algorithm, and thus the final integral result of the PID algorithm may be prevented from being too large.

Illustratively, assuming that an integral interval is 0-0.5, the integral result of the PID algorithm is (-2.25)*0.5=-1.125, and the absolute value 1.125 of the integral result of the PID algorithm is greater than the integral upper limit 0.5. Thus, the final integral result of the PID algorithm is 0.5.

The speed adjustment proportion may be determined according to the proportional result, the derivative result, and the integral result (or the final integral result) of the PID algorithm. Then, whether the speed adjustment proportion is less than 0 may be determined. In a case of determining that the speed adjustment proportion is less than 0, the first speed value may be determined according to the minimum travelling speed of the autonomous mobile apparatus. A product of the minimum travelling speed of the autonomous mobile apparatus and N may be determined as the first speed value. N is a value greater than or equal to 1. Illustratively, N may be 2 or a value greater than 2.

In a case of determining that the speed adjustment proportion is greater than or equal to 0, whether the present current of the working motor is greater than the initial current of the working motor, or whether the present travelling speed of the autonomous mobile apparatus is greater than the initial travelling speed of the autonomous mobile apparatus or the ratio of the initial travelling speed to the speed adjustment proportion may continue to be determined. In a case of determining that the present current of the working motor is greater than the initial current of the working motor, or the present travelling speed of the autonomous mobile apparatus is greater than the initial travelling speed of the autonomous mobile apparatus or the ratio of the initial travelling speed to the speed adjustment proportion, the third speed value may be determined according to the speed adjustment proportion and the present travelling speed of the autonomous mobile apparatus. A product of the speed adjustment proportion and the absolute value of the present travelling speed of the autonomous mobile apparatus may be determined as the third speed value. Then, whether the third speed value is greater than the second speed value may be determined. In a case of determining that third speed value is greater than the second speed value, the second speed value may be determined as the first speed value, and then step 103 may be executed. In a case of determining that the third speed value is less than or equal to the second speed value, whether the third speed value is less than the minimum travelling speed of the autonomous mobile apparatus may continue to be determined. In a case of determining that the third speed value is less than the minimum travelling speed of the autonomous mobile apparatus, it indicates that the third speed value is too small. Thus, the first speed value may be determined according to the minimum travelling speed of the autonomous mobile apparatus. In a case of determining that the third speed value is greater than or equal to the minimum travelling speed of the autonomous mobile apparatus, the third speed value may be determined as the first speed value. Reference can be made to the above related descriptions for the detailed description of determining the first speed value according to the minimum travelling speed of the autonomous mobile apparatus. The initial current of the working motor is a current of the working motor generated at the beginning of present working of the autonomous mobile apparatus. The initial travelling speed of the autonomous mobile apparatus is the travelling speed generated at the beginning of present working of the autonomous mobile apparatus.

In a case of determining that the present current of the working motor is not greater than the initial current of the working motor and the present travelling speed of the autonomous mobile apparatus is not greater than the initial travelling speed of the autonomous mobile apparatus or the ratio of the initial travelling speed to the speed adjustment proportion, whether the present travelling speed of the autonomous mobile apparatus is less than the activation speed of the autonomous mobile apparatus may continue to be determined. In a case of determining that the present travelling speed of the autonomous mobile apparatus is less than the activation speed of the autonomous mobile apparatus, the second speed value may be determined as the first speed value. In a case of determining that the present travelling speed of the autonomous mobile apparatus is not less than the activation speed of the autonomous mobile apparatus, the activation speed of the autonomous mobile apparatus may be determined as the first speed value. The activation speed of the autonomous mobile apparatus is time taken from when the autonomous mobile apparatus receives an activation instruction to when activation is completed.

As shown in FIG. 4, in a case where the speed adjustment proportion is less than 0, the first speed value may alternatively be determined according to the minimum travelling speed of the autonomous mobile apparatus. In a case where the speed adjustment proportion is greater than or equal to 0, the present current of the working motor is not greater than the initial current of the working motor, the present travelling speed of the autonomous mobile apparatus is not greater than the initial speed of the autonomous mobile apparatus, and the present travelling speed of the autonomous mobile apparatus is less than the activation speed of the autonomous mobile apparatus, the second speed value may alternatively be determined as the first speed value. In a case where the speed adjustment proportion is greater than or equal to 0, the present current of the working motor is not greater than the initial current of the working motor, the present travelling speed of the autonomous mobile apparatus is not greater than the initial speed of the autonomous mobile apparatus, and the present travelling speed of the autonomous mobile apparatus is not less than the activation speed of the autonomous mobile apparatus, the activation speed of the autonomous mobile apparatus may be determined as the first speed value. After the first speed value is determined, step 103 may be executed.

Illustratively, assuming that a previous current of the working motor is 20 A, A denotes 30 A, B denotes 60 A, C denotes 20 A, D denotes 2, *Kₚ* denotes 1.0, *Kᵢ* denotes 0.1, *K_{d}* denotes 0.2, and the time difference is 0.5 s, the previous $E \left(t\right) = {\left(\frac{20 - 60}{20}\right)}^{2} = 4$, the present $E \left(t\right) = {\left(\frac{30 - 60}{20}\right)}^{2} = 2.25$, and ${\int }_{0}^{t} E \left(τ\right) dτ = {\int }_{0}^{0.5} 2.25 dτ = 1.125$. Since 1.125 is greater than the integral upper limit 0.5, the final integral result is 0.5, $\frac{dE \left(t\right)}{dt} = \frac{2.25 - 4}{0.5} = - 3.5$, and the speed adjustment proportion=1-(1.0*2.25+0.1*1.125+0.2*(-3.5))=-0.675. The first speed value is determined according to the minimum travelling speed of the autonomous mobile apparatus.

Illustratively, assuming that a previous current of the working motor is 20 A, A denotes 40 A, B denotes 30 A, C denotes 20 A, D denotes 2, *Kₚ* denotes 1.0, *Kᵢ* denotes 0.1, *K_{d}* denotes 0.2, and the time difference is 0.5 s, the previous $E \left(t\right) = {\left(\frac{20 - 30}{20}\right)}^{2} = 0.25$ , the present $E \left(t\right) = {\left(\frac{40 - 30}{20}\right)}^{2} = 0.25 , {\int }_{0}^{t} E \left(τ\right) dτ = {\int }_{0}^{0.5} 0.25 dτ = 0.125$, $\frac{dE \left(t\right)}{dt} = \frac{0.25 - 0.25}{0.5} = 0$, and the speed adjustment proportion=1-(1.0*0.25+0.1*0.125+0.2*0)=0.7375. Thus, the first speed value=0.7375*absolute value of present travelling speed. It can be seen that the autonomous mobile apparatus is decelerated.

It should be understood that in a working process of the autonomous mobile apparatus, *Kₚ, Kᵢ,* and *K_{d}* of the PID algorithm may be fixed or adjusted according to the actual condition, and finally an optimal result is taken as a final value.

It should be understood that the flow shown in FIG. 4 is to illustratively describe determination of the first speed value through the preset speed adjustment algorithm, which is not limitative. Illustratively, steps B1 and B2 may be executed after steps B3-B6. Illustratively, the preset speed adjustment algorithm may be another preset speed adjustment algorithm. In this case, steps B1, B2, and B7 may not be executed, and step B8 may be replaced by the step that the speed adjustment proportion is determined according to the present current of the working motor through another preset speed adjustment algorithm. Illustratively, steps B3-B6 may not be executed. Illustratively, steps B9 and B10 may not be executed. Illustratively, steps B9 and B10 and steps B10-B20 may not be executed. Illustratively, steps B13-B17 may not be executed. In this case, step B12 may be replaced by the step that the first speed value is determined according to the speed adjustment proportion and the present travelling speed of the autonomous mobile apparatus.

103, the working current of the travelling motor is adjusted, and the travelling speed value of the autonomous mobile apparatus is caused to reach the first speed value.

After the first speed value is determined, the working current of the travelling motor may be adjusted, and the travelling speed value of the autonomous mobile apparatus is caused to reach the first speed value. To be specific, the travelling speed value of the autonomous mobile apparatus is adjusted to the first speed value by adjusting the working current of the travelling motor.

In the method for adjusting a speed described in FIG. 1, the autonomous mobile apparatus including the travelling motor and the working motor acquires the present current of the working motor, determines the first speed value according to the present current of the working motor through the preset speed adjustment algorithm, adjusts the working current of the travelling motor, and causes the travelling speed of the autonomous mobile apparatus to reach the first speed value. It can be seen that the travelling speed of the autonomous mobile apparatus may be adjusted according to the current of the working motor of the autonomous mobile apparatus. Thus, the flexibility of speed adjustment can be improved. In addition, the travelling speed of the autonomous mobile apparatus may be adjusted according to the current of the working motor of the autonomous mobile apparatus. Thus, overload of the autonomous mobile apparatus can be avoided, working efficiency, balance, and stability of the autonomous mobile apparatus can be improved, and power consumption of the autonomous mobile apparatus can be reduced.

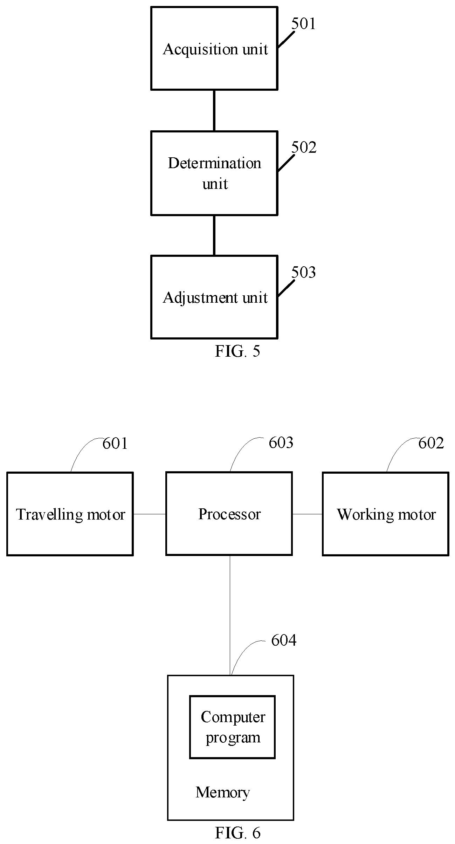

With reference to FIG. 5, a schematic structural diagram of a device for adjusting a speed disclosed in the embodiments of the present disclosure is shown in FIG. 5. The device for adjusting a speed may be applied to the autonomous mobile apparatus, where the autonomous mobile apparatus includes a travelling motor and a working motor. As shown in FIG. 5, the device for adjusting a speed may include:
an acquisition unit 501 configured to acquire a present current of the working motor;
a determination unit 502 configured to determine a first speed value according to the present current of the working motor through a preset speed adjustment algorithm; and
an adjustment unit 503 configured to adjust a working current of the travelling motor, and cause a travelling speed value of the autonomous mobile apparatus to reach the first speed value.

In some embodiments, the determination unit 502 is specifically configured to:
determine a speed adjustment proportion according to the present current of the working motor through the preset speed adjustment algorithm; and
determine the first speed value according to the speed adjustment proportion and a present travelling speed of the autonomous mobile apparatus.

In some embodiments, the determination unit 502 determines the first speed value according to the speed adjustment proportion and the present travelling speed of the autonomous mobile apparatus as follows:
in a case where the speed adjustment proportion is greater than or equal to 0, and the present current of the working motor is greater than an initial current of the working motor or the present travelling speed of the autonomous mobile apparatus is greater than an initial travelling speed of the autonomous mobile apparatus, the first speed value is determined according to the speed adjustment proportion and the present travelling speed of the autonomous mobile apparatus.

In some embodiments, the determination unit 502 is further configured to:
determine, in a case where the speed adjustment proportion is less than 0, the first speed value according to a minimum travelling speed of the autonomous mobile apparatus;
determine, in a case where the speed adjustment proportion is greater than or equal to 0, the present current of the working motor is not greater than an initial current of the working motor, the present travelling speed of the autonomous mobile apparatus is not greater than an initial travelling speed of the autonomous mobile apparatus, and the present travelling speed of the autonomous mobile apparatus is less than an activation speed of the autonomous mobile apparatus, a second speed value as the first speed value, where the second speed value is a preset travelling speed value of the autonomous mobile apparatus; and
determine, in a case where the speed adjustment proportion is greater than or equal to 0, the present current of the working motor is not greater than an initial current of the working motor, the present travelling speed of the autonomous mobile apparatus is not greater than an initial travelling speed of the autonomous mobile apparatus, and the present travelling speed of the autonomous mobile apparatus is not less than an activation speed of the autonomous mobile apparatus, the activation speed of the autonomous mobile apparatus as the first speed value.

In some embodiments, the determination unit 502 determines the first speed value according to the speed adjustment proportion and the present travelling speed of the autonomous mobile apparatus as follows:
a third speed value is determined according to the speed adjustment proportion and the present travelling speed of the autonomous mobile apparatus; and
in a case where the third speed value is less than or equal to a second speed value and greater than or equal to a minimum travelling speed of the autonomous mobile apparatus, the third speed value is determined as the first speed value, where the second speed value is a preset travelling speed value of the autonomous mobile apparatus.

The determination unit 502 is further configured to:
determine, in a case where the third speed value is greater than the second speed value, the second speed value as the first speed value; and
determine, in a case where the third speed value is less than the minimum travelling speed of the autonomous mobile apparatus, the first speed value according to the minimum travelling speed of the autonomous mobile apparatus.

In some embodiments, the acquisition unit 501 is specifically configured to acquire, in a case where a present travelling speed of the autonomous mobile apparatus is greater than or equal to the minimum travelling speed of the autonomous mobile apparatus, the present current of the working motor.

The determination unit 502 is further configured to:
determine, in a case where the present travelling speed of the autonomous mobile apparatus is less than the minimum travelling speed of the autonomous mobile apparatus, a difference between the present travelling speed of the autonomous mobile apparatus and the second speed value, where the second speed value is a preset travelling speed value of the autonomous mobile apparatus;
determine, in a case where the difference is less than a speed threshold, the second speed value as the first speed value;
determine, in a case where the difference is not less than a speed threshold and the present travelling speed of the autonomous mobile apparatus is greater than the second speed value, the difference between the present travelling speed of the autonomous mobile apparatus and the speed threshold as the first speed value; and
determine, in a case where the difference is not less than a speed threshold and the present travelling speed of the autonomous mobile apparatus is not greater than the second speed value, a sum of the present travelling speed of the autonomous mobile apparatus and the speed threshold as the first speed value.

In some embodiments, the determination unit 502 determines the first speed value according to the present current of the working motor through the preset speed adjustment algorithm as follows:
in a case where the present current of the working current is within a threshold range, the first speed value is determined according to the present current of the working motor through the preset speed adjustment algorithm.

In some embodiments, the determination unit 502 is further configured to determine, in a case where the present travelling speed of the autonomous mobile apparatus is greater than or equal to the minimum travelling speed of the autonomous mobile apparatus, a time difference according to current time and a previous time stamp.

The determination unit 502 is specifically configured to determine, in a case where the time difference is greater than 0 and less than or equal to 1, the first speed value according to the present current of the working motor through the preset speed adjustment algorithm.

The determination unit 502 is further configured to determine, in a case where the time difference is equal to 0, a second speed value as the first speed value, where the second speed value is a preset travelling speed value of the autonomous mobile apparatus.

Those skilled in the art can clearly understand that for convenience and conciseness of descriptions, reference can be made to the corresponding processes in the above method embodiments for specific working processes of the device for adjusting a speed, the acquisition unit 501, the determination unit 502, and the adjustment unit 503 described above, which will not be repeated herein.

In the plurality of embodiments provided by the present disclosure, units may be coupled in an electrical form, a mechanical form, etc.

Also, each function unit in the embodiments of the present disclosure can be integrated into a processing unit. Alternatively, each unit can be physically separated. Alternatively, two or more units can be integrated into one unit. The above integrated unit can be implemented in a form of hardware or a software function unit.

With reference to FIG. 6, a schematic structural diagram of an autonomous mobile apparatus disclosed in the embodiments of the present disclosure is shown in FIG. 6. As shown in FIG. 6, the autonomous mobile apparatus may include a travelling motor 601, a working motor 602, a processor 603, and a memory 604. The memory 604 may store one or more computer programs. The one or more computer programs are configured to execute the method as described in the foregoing method embodiment. The memory 604 may exist alone or may be integrated with the processor 603.

The processor 603 may include one or more processing cores. The processor 603 may connect each part of an entire autonomous mobile apparatus through various interfaces and lines, and execute various functions of the autonomous mobile apparatus and data processing by running or executing instructions, programs, code sets, or instruction sets stored in the memory 604, and invoking data stored in the memory 604. Optionally, the processor 603 may be implemented in at least one hardware form of digital signal processing (DSP), a field-programmable gate array (FPGA), and a programmable logic array (PLA). The processor 603 may integrate one or a combination of a central processing unit (CPU), a graphics processing unit (GPU), and a modem. The CPU mainly processes an operating system, a user interface, and an application, etc. The GPU is responsible for rendering and drawing of display content. The modem is configured to process wireless communication. It can be understood that the above modem may be implemented through a communication chip separately instead of being integrated into the processor 603.

The memory 604 may include a random access memory (RAM) or a read-only memory (ROM). The memory 604 may be configured to store instructions, programs, code, code sets, or instruction sets. The memory 604 may include a program storage area and a data storage area. The program storage area may store instructions configured to implement the operating system, instructions configured to implement at least one function (such as a touch function, a sound playback function, and an image playback function), instructions configured to implement each method embodiment described above, etc. The data storage area may store data (such as a phone book, audio and video data, chat record data) created by the autonomous mobile apparatus in use, etc.

In a case where the computer program instructions stored in the memory 604 are executed, the processor 603 may be configured to execute various operations executed by the autonomous mobile apparatus in the method embodiment described above. Specifically, the processor controls the travelling motor according to the working motor to implement various operations executed by the autonomous mobile apparatus in the method embodiment described above. Reference can be made to the foregoing embodiments for the specific implementation of these operations, which will not be repeated herein.

A computer-readable storage medium is further disclosed in the embodiments of the present disclosure. The computer-readable storage medium stores computer program codes, where the computer program codes are invokable by the processor to execute various operations in the method embodiment described above. Reference can be made to the foregoing embodiments for the specific implementation of each operation described above, which will not be repeated herein.

The computer-readable storage medium may be a flash memory, an electrically erasable programmable read only memory (EEPROM), an erasable programmable read only memory (EPROM), a hard disk, an ROM, etc. Optionally, the computer-readable storage medium may include a non-transitory computer-readable storage medium. The computer-readable storage medium has a storage space for program codes executing any method steps in the above method. These computer program codes may be read from or written into one or more computer program products. The computer program codes may be compressed in an appropriate form, for example.

Finally, it should be noted that the above embodiments are merely used to describe the technical solutions of the present disclosure, and are not intended to limit the present disclosure. Although the present disclosure is described in detail with reference to the foregoing embodiments, those of ordinary skill in the art should understand that they still can make modifications to the technical solutions described in all the foregoing embodiments, or make equivalent substitutions to some technical features in the embodiments. These modifications or substitutions do not make the essence of the corresponding technical solutions depart from the spirit and scope of the technical solutions in the embodiments of the present disclosure.

## Claims

1. A method for adjusting a speed, applied to an autonomous mobile apparatus, **characterized in that** the autonomous mobile apparatus comprises a travelling motor and a working motor, and the method comprises:
acquiring a present current of the working motor;
determining a first speed value according to the present current through a preset speed adjustment algorithm; and
adjusting a working current of the travelling motor, and causing a travelling speed value of the autonomous mobile apparatus to reach the first speed value.

2. The method according to claim 1, **characterized in that** the determining a first speed value according to the present current through a preset speed adjustment algorithm comprises:
determining a speed adjustment proportion according to the present current through the preset speed adjustment algorithm; and
determining the first speed value according to the speed adjustment proportion and a present travelling speed of the autonomous mobile apparatus.

3. The method according to claim 2, **characterized in that** the determining a speed adjustment proportion according to the present current through the preset speed adjustment algorithm comprises:
determining a proportional result of the preset speed adjustment algorithm according to the present current of the working motor, and determining a derivative result and an integral result of the preset speed adjustment algorithm according to the proportional result; and
determining the speed adjustment proportion according to the proportional result, the derivative result, and the integral result of the preset speed adjustment algorithm.

4. The method according to claim 3, **characterized in that** the determining a proportional result of the preset speed adjustment algorithm according to the present current of the working motor comprises:
determining the proportional result of the preset speed adjustment algorithm according to the present current of the working motor, a steady-state current of the working motor, and a current control range of the working motor.

5. The method according to any one of claims 2-4, **characterized in that** the determining the first speed value according to the speed adjustment proportion and a present travelling speed of the autonomous mobile apparatus comprises:
determining, in a case where the speed adjustment proportion is greater than or equal to 0, and the present current is greater than an initial current of the working motor or the present travelling speed is greater than an initial travelling speed of the autonomous mobile apparatus, the first speed value according to the speed adjustment proportion and the present travelling speed of the autonomous mobile apparatus.

6. The method according to any one of claims 2-4, **characterized in that** the determining the first speed value according to the speed adjustment proportion and a present travelling speed of the autonomous mobile apparatus comprises:
determining, in a case where the speed adjustment proportion is less than 0, the first speed value according to a minimum travelling speed of the autonomous mobile apparatus;
determining, in a case where the speed adjustment proportion is greater than or equal to 0, the present current is not greater than an initial current of the working motor, the present travelling speed is not greater than an initial travelling speed of the autonomous mobile apparatus, and the present travelling speed is less than an activation speed of the autonomous mobile apparatus, a second speed value as the first speed value, wherein the second speed value is a preset travelling speed value of the autonomous mobile apparatus; and
determining, in a case where the speed adjustment proportion is greater than or equal to 0, the present current is not greater than an initial current of the working motor, the present travelling speed is not greater than an initial travelling speed of the autonomous mobile apparatus, and the present travelling speed is not less than an activation speed of the autonomous mobile apparatus, the activation speed as the first speed value.

7. The method according to claim 2, **characterized in that** the determining the first speed value according to the speed adjustment proportion and a present travelling speed of the autonomous mobile apparatus comprises:
determining a third speed value according to the speed adjustment proportion and the present travelling speed of the autonomous mobile apparatus; and
determining, in a case where the third speed value is less than or equal to a second speed value and greater than or equal to a minimum travelling speed of the autonomous mobile apparatus, the third speed value as the first speed value, wherein the second speed value is a preset travelling speed value of the autonomous mobile apparatus;

8. The method according to claim 7, **characterized in that** after the determining a third speed value according to the speed adjustment proportion and the present travelling speed of the autonomous mobile apparatus, the method further comprises:
determining, in a case where the third speed value is greater than the second speed value, the second speed value as the first speed value; and
determining, in a case where the third speed value is less than the minimum travelling speed of the autonomous mobile apparatus, the first speed value according to the minimum travelling speed.

9. The method according to claim 1, **characterized in that** before the acquiring a present current of the working motor, the method further comprises:
determining whether an obstacle exists in a travelling direction of the autonomous mobile apparatus;
adjusting, in a case where the obstacle exists, the working current of the travelling motor, and causing a travelling speed of the autonomous mobile apparatus to reach 0; and
determining, in a case where no obstacle exists, whether a present travelling speed of the autonomous mobile apparatus is less than a minimum travelling speed of the autonomous mobile apparatus.

10. The method according to claim 1, **characterized in that** the acquiring a present current of the working motor comprises:
acquiring, in a case where a present travelling speed of the autonomous mobile apparatus is greater than or equal to a minimum travelling speed of the autonomous mobile apparatus, the present current of the working motor;

11. The method according to claim 10, **characterized in that** before the acquiring a present current of the working motor, the method further comprises:
determining, in a case where the present travelling speed of the autonomous mobile apparatus is less than the minimum travelling speed of the autonomous mobile apparatus, a difference between an absolute value of the present travelling speed and a second speed value, wherein the second speed value is a preset travelling speed value of the autonomous mobile apparatus;
determining, in a case where the difference is less than a speed threshold, the second speed value as the first speed value;
determining, in a case where the difference is not less than a speed threshold and the absolute value of the present travelling speed is greater than the second speed value, a difference between the absolute value of the present travelling speed and the speed threshold as the first speed value; and
determining, in a case where the difference is not less than a speed threshold and the absolute value of the present travelling speed is not greater than the second speed value, a sum of the absolute value of the present travelling speed and the speed threshold as the first speed value.

12. The method according to claim 1, **characterized in that** the determining a first speed value according to the present current through a preset speed adjustment algorithm comprises:
determining, in a case where the present current is within a threshold range, the first speed value according to the present current through the preset speed adjustment algorithm.

13. The method according to claim 1, **characterized in that** the determining a first speed value according to the present current through a preset speed adjustment algorithm comprises:
determining, in a case where a time difference is greater than 0 and less than or equal to 1, the first speed value according to the present current through the preset speed adjustment algorithm.

14. The method according to claim 1, **characterized in that** the determining a first speed value according to the present current through a preset speed adjustment algorithm comprises:
determining, in a case where a time difference is equal to 0, a second speed value as the first speed value, wherein the second speed value is a preset travelling speed value of the autonomous mobile apparatus.

15. The method according to claim 13 or 14, **characterized by** further comprising:
determining, in a case where a present travelling speed of the autonomous mobile apparatus is greater than or equal to a minimum travelling speed of the autonomous mobile apparatus, a time difference according to current time and a previous time stamp.

16. The method according to claim 1, **characterized by** further comprising:
determining a thickness of snow through a sensor of the autonomous mobile apparatus or a load condition of a snow rolling shovel; and
adjusting the travelling speed value of the autonomous mobile apparatus according to the thickness of the snow.

17. An autonomous mobile apparatus, comprising a travelling motor, a working motor, and a processor, **characterized in that** in a case where at least one processor controls the travelling motor to work according to the working motor, the at least one processor executes the following steps:
acquiring a present current of the working motor;
determining a first speed value according to the present current through a preset speed adjustment algorithm; and
adjusting a working current of the travelling motor, and causing a travelling speed value of the autonomous mobile apparatus to reach the first speed value.

18. The autonomous mobile apparatus according to claim 17, **characterized in that** the autonomous mobile apparatus is a snow blower.

19. The autonomous mobile apparatus according to claim 17 or 18, **characterized in that** the working motor is a snow rolling motor corresponding to a snow rolling shovel.

20. One or more computer-readable storage media storing computer-readable instructions, **characterized in that** the computer-readable instructions, when executed by at least one processor, cause the at least one processor to execute the following steps:
acquiring a present current of a working motor;
determining a first speed value according to the present current through a preset speed adjustment algorithm; and
adjusting a working current of a travelling motor, and causing a travelling speed value of an autonomous mobile apparatus to reach the first speed value.
